# EUROPÄISCHE PATENTANMELDUNG

(11) **EP 1 180 706 A1**
(43) Veröffentlichungstag der Anmeldung: **20.02.2002**
(21) Anmeldenummer: 00117546.2
(22) Anmeldetag: 14.08.2000
(51) Int. Cl.: G02B 6/44, G02B 6/38

(54) **Vorkonfektioniertes Lichtwellenleiterkabel und Verfahren zur Vorkonfektionierung eines Lichtwellenleiterkabels**

(71) Anmelder: DÄTWYLER AG SCHWEIZERISCHE KABEL-, GUMMI- UND KUNSTSTOFFWERKE, CH-6460 Altdorf (CH)
(72) Erfinder: Kraus, Jozef, 94234 Viechtach (DE)
(74) Vertreter: Lippich, Wolfgang, Dipl.-Pys., Dr.rer.nat.

(57) **Zusammenfassung**

Die Erfindung betrifft ein vorkonfektioniertes Lichtwellenleiter-Kabel mit wenigstens einer Bündelader (4) mit mehreren Lichtwellenleiter-Fasern (6) und einem Aufteilungselement (7) an wenigstens einem Ende des Kabels, wobei die Fasern (6) auf einer Seite des Aufteilungselements (7) gemeinsam in der Bündelader (4) verlaufen und auf dessen anderer Seite jeweils mit einem Schlauch (11) überzogen sind, und wobei das Aufteilungselement (7) wenigstens teilweise mit einer Einbettungsmasse (13) gefüllt ist. Die Erfindung ist dadurch gekennzeichnet, daß im Aufteilungselement (7) wenigstens ein Übergangsgehäuse (27) angeordnet ist, welches die Fasern (6) im Übergangsbereich vom gemeinsamen Verlauf in der Bündelader (4) zu dem mit Schläuchen (11) überzogenen Verlauf umschließt. Die Erfindung betrifft auch ein entsprechendes Verfahren.

## Beschreibung

Die Erfindung betrifft ein vorkonfektioniertes Lichtwellenleiter-Kabel mit wenigstens einer Bündelader mit mehreren Lichtwellenleiter-Fasern und einem Aufteilungselement an wenigstens einem Ende des Kabels, wobei die Fasern auf einer Seite des Aufteilungselements gemeinsam in der Bündelader verlaufen und auf dessen anderer Seite jeweils mit einem Schlauch überzogen sind, und wobei das Aufteilungselement wenigstens teilweise mit einer Einbettungsmasse gefüllt ist. Die Erfindung betrifft auch ein entsprechendes Verfahren zur Vorkonfektionierung eines Lichtwellenleiter-Kabels.

Die Entwicklung von Lichtwellenleitern (im folgenden auch mit "LWL" abgekürzt) hat seit den ersten Vorschlägen in den 60er Jahren große Fortschritte gemacht. Heute sind Lichtwellenleiter mit Dämpfungswerten von < 0,4 dB/km bei 1310 nm für Monomodefasern Stand der Technik. Hinsichtlich der Bandbreite erreicht man Werte von 1000 GHz/km und mehr. Neben diesen hervorragenden Übertragungswerten ist ein wichtiger Vorteil der Lichtwellenleitung, daß sie in einem elektrisch nichtleitenden Material stattfindet. Heute hat daher die optische Kommunikation mit Hilfe der Glasfaser ihren festen Platz gefunden. Glasfaserkabel übertragen Telefongespräche von Zentrale zu Zentrale und leiten Fernseh, UKW- und Telefoniesignale zu Teilnehmern. Zunehmend hält die Lichtwellenleitertechnologie auch in der Gebäudeverkabelung für Nahbereichsnetze (LAN - Local Area Network) Einzug. Diesen Vorteilen stehen aber auch Nachteile gegenüber. Schwierig ist vor allem die Verbindung eines Lichtwellenleiters mit einem anderen oder mit einem Anschlußelement (z.B. einem Stecker oder einer Buchse). Es sind eine Reihe verschiedener Verbindungstechniken bekannt. Gemeinsam ist den meisten, daß für die Verbindung eine genau definierte Endfläche des Wellenleiters geschaffen werden muß, und daß die zu verbindenden Enden hinsichtlich Winkel und Versetzung sehr genau ausgerichtet werden müssen. Darüber hinaus sind Glasfasern gegenüber Zug- und Biegebeanspruchung empfindlich. Die Installation von Lichtwellenleiter-Gebäudeverkabelungen erfordert daher ausgebildetes Fachpersonal und ist insgesamt relativ aufwendig.

Zur Minderung dieser technischen Probleme ist es üblich, vorkonfektionierte Lichtwellenleiter-Kabel zu verwenden. Hierbei werden LWL-Anschluß- oder -Verbindungselemente bereits werksseitig auf das Kabel aufgebracht. Die technologisch anspruchsvollen, Fachpersonal erfordernden und zum Teil auch eine reine Umgebung voraussetzenden Arbeiten sind hierdurch von der Baustelle zum Hersteller verlagert. Dies wirkt sich günstig im Hinblick auf die Erfüllung von Qualitätsanforderungen aus und verringert den Gesamtaufwand.

Da ein solches vorkonfektioniertes LWL-Kabel aber mechanisch empfindlich ist, bedarf es einer besonderen Ausrüstung, um für die Verlegung in Gebäude im vorkonfektionierten Zustand geeignet zu sein. Denn LWL-Kabel müssen bei der Installation häufig über lange Strecken durch bereits vorhandene Kabelkanäle oder Rohre gezogen werden, womit i.a. hohe mechanische Beanspruchungen einhergehen. Auch nach dem Einziehen ist ein derartiges Kabel oft noch mechanischen Beanspruchungen ausgesetzt, da schützende Verteiler- oder Anschlußdosen zu diesem Zeitpunkt oft noch nicht vorhanden sind. Das Kabelende wird dann zunächst z.B. aus einem Installationskanal heraushängen und dadurch Beanspruchungen ausgesetzt sein. Andererseits sollten bei einem vorkonfektionierten Kabel an dem mit Anschlußelementen versehenen Ende die LWL-Fasern über einen relativ langen Endabschnitt in vereinzelter Form vorliegen, um bei der späteren Montage z.B. einer Steckdose keinen Beschränkungen unterworfen zu sein.

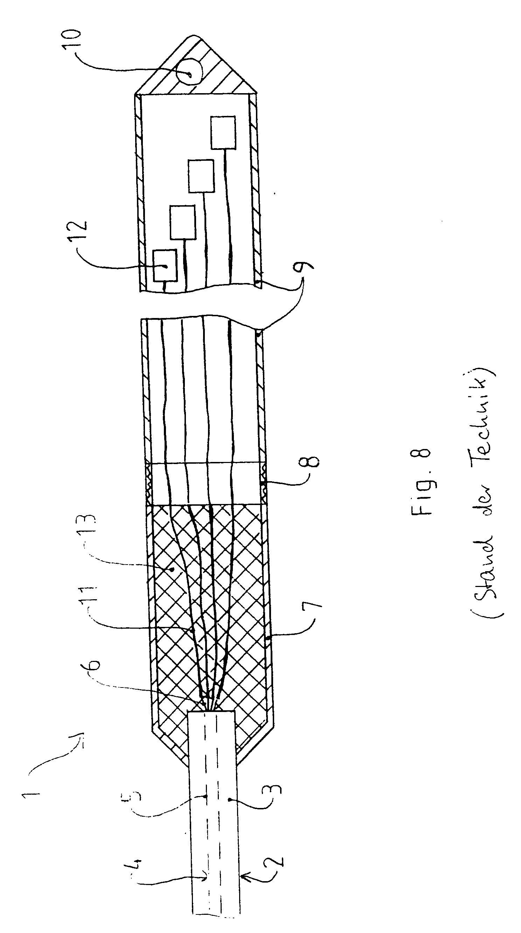

Es ist beispielsweise ein vorkonfektioniertes Lichtwellenleiter-Kabel bekannt, dessen hier interessierender Endbereich in Fig. 8 veranschaulicht ist: Ein vorkonfektioniertes LWL-Kabel 1 ist in einem Kabelabschnitt 2 aus einem Mantel 3 und einer oder mehreren Bündeladern 4 aufgebaut. Von diesen weist jede eine Bündeladerhülle 5 auf, in der mehrere Glasfasern 6 verlaufen. Auf das Ende des Kabelabschnitts 2 ist ein becherförmiges Aufteilungselement 7 aufgebracht, welches mit einem Boden am Mantel 3 befestigt ist und an seiner oberen Öffnung ein Gewinde 8 aufweist. In dieses ist ein Zugschlauch 9 einschraubbar, welcher an seinem anderen Ende eine Zugöse 10 aufweist. Der Mantel 3 und die Bündeladerhülle 5 enden im Aufteilungselement 7, die einzelnen Glasfasern 6 führen dort aus dem Ende der Bündeladerhülle 5 heraus. Sie sind jeweils einzeln mit einem Schlauch 11 überzogen, welcher vom Ende der Bündeladerhülle 5 bis zu jeweils einem LWL-Anschlußelement 12 reicht. Das Aufteilungselement 7 mit den darin verlaufenden, mit Schläuchen 11 überzogenen Glasfasern 6 ist mit einer Vergußmasse 13 ausgefüllt. Bei der Installation werden derartig vorkonfektionierte Lichtwellenleiter-Kabel 1 an ein Zugseil gekoppelt und. durch Kabelkanäle, Rohre etc. gezogen.

Obgleich die Verwendung dieser bekannten vorkonfektionierten LWL-Kabel große Vorteile gegenüber einer Vor-Ort-Konfektionierung bietet, zeigen sich vor allem bei der Verwendung von Monomodefasern zum Teil relativ hohe Dämpfungswerte.

Die Erfindung stellt ein vorkonfektioniertes Lichtwellenleiter-Kabel mit wenigstens einer Bündelader mit mehreren Lichtwellenleiter-Fasern und einem Aufteilungselement an wenigstens einem Ende des Kabels bereit. Die Fasern verlaufen auf einer Seite des Aufteilungselements gemeinsam in der Bündelader und sind auf dessen anderer Seite jeweils mit einem Schlauch überzogen. Das Aufteilungselement ist wenigstens teilweise mit einer Einbettungsmasse gefüllt. Das Lichtwellenleiter-Kabel ist dadurch gekennzeichnet, daß im Aufteilungselement wenigstens ein Übergangsgehäuse angeordnet ist, welches die Fasern im Übergangsbereich vom gemeinsamen Verlauf in der Bündelader zu dem mit Schläuchen überzogenen Verlauf umschließt.

Die Erfindung ist auch auf ein Verfahren zur Vorkonfektionierung eines Lichtwellenleiter-Kabels mit wenigstens einer Bündelader mit mehreren Lichtwellenleiter-Fasern gerichtet, mit folgenden Schritten: an wenigstens einem Ende des Kabels werden die Fasern freigelegt; ein Aufteilungselement wird am Übergang von nicht-freigelegten zu freigelegten Fasern auf dem Kabel angeordnet. Im Aufteilungselement wird ein Übergangsgehäuse angeordnet. Die freigelegten Adern werden jeweils mit einem Schlauch überzogen, und die Schläuche werden einzeln oder gemeinsam in das Übergangsgehäuse eingeführt. Das Aufteilungselement wird schließlich zumindest teilweise mit Einbettungsmasse gefüllt, wonach diese gehärtet wird oder selbsttätig härtet.

Die Erfindung wird nun anhand von bevorzugten Ausführungsbeispielen und der angefügten Zeichnung näher erläutert. In der schematischen Zeichnung zeigen:
- Fig. 1: eine Querschnittsansicht einer Glasfaser;
- Fig. 2: eine Querschnittsansicht eines LichtwellenleiterKabels;
- Fig. 3: eine Querschnittsansicht einer mit einem Schlauch überzogenen Lichtwellenleiter-Faser;
- Fig. 4: eine Seitenansicht eines Endabschnitts eines vorkonfektionierten Lichtwellenleiter-Kabels;
- Fig. 5: eine gegenüber Fig. 5 vergrößerte Seitenansicht des Endbereichs des vorkonfektionierten Lichtwellenleiter-Kabels, wobei ein Aufteilungselement aufgeschnitten dargestellt ist;
- Fig. 6: einen Längsschnitt eines Übergangsgehäuses samt Bündelader und Lichtwellenleiter-Fasern;
- Fig. 7: einen Querschnitt des Übergangsgehäuses entlang der Linie A-A in Fig. 6;
- Fig. 8: eine Fig. 5 entsprechende Darstellung eines im Stand der Technik bekannten, vorkonfektionierten Lichtwellenleiter-Kabels.

In den Figuren tragen sich entsprechende Elemente gleiche Bezugszeichen.

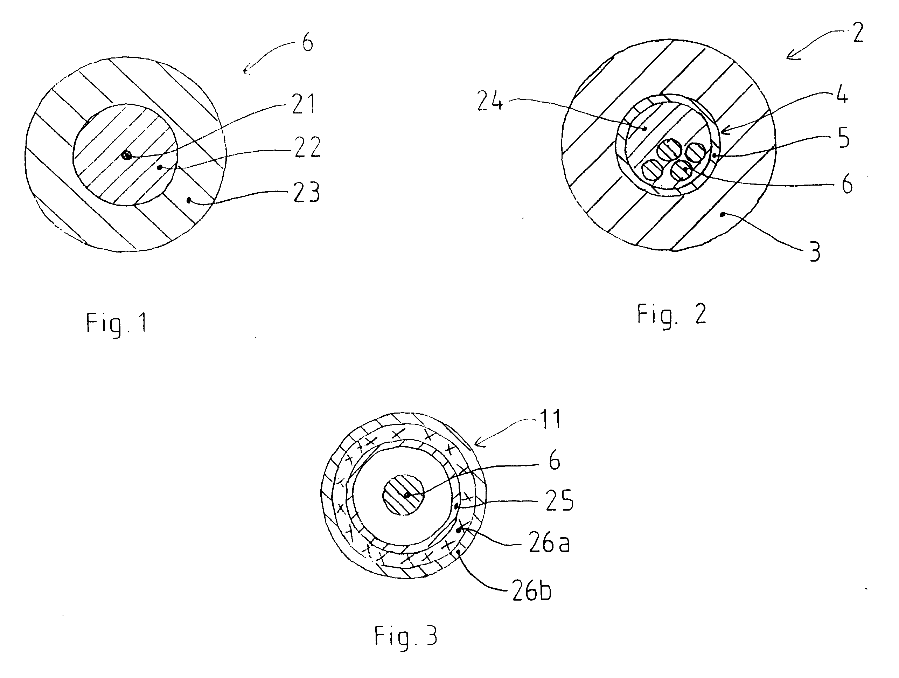

Bevor eine Ausführungsform einer Glasfaser gemäß Fig. 1 näher erläutert wird, folgen zunächst einige Anmerkungen zu den offenbarten Ausführungsformen.

Die Erfinder haben erkannt, daß für das Auftreten relativ hoher Dämpfungswerte bei vorkonfektionierten LWL-Kabeln oft Mikrobiegungen verantwortlich sind, welche ggf. in einem kurzen Übergangsbereich auftreten, in dem die Glasfasern im Inneren des Aufteilungselements ohne schützenden Schlauch, also direkt in der Einbettungsmasse liegen. Als eine von mehreren möglichen Ursachen für solche Mikrobiegungen wurde erkannt, daß beim Vergießen des Aufteilungselements mit der Einbettungsmasse in dieser Luftblasen entstehen können, und diese auftriebsbedingt gegen die Glasfasern in dem genannten Übergangsbereich drücken und hierdurch Mikrobiegungen hervorrufen können.

Das Übergangsgehäuse hat eine Schutzfunktion für die LWL-Fasern in diesem Übergangsbereich, und vermindert daher die Gefahr des Auftretens von Mikrobiegungen. Dies gilt selbst dann, wenn Einbettungsmasse in das Gehäuse eindringen kann und es nicht zug- oder druckentlastend wirkt. Bei den im folgenden beschriebenen bevorzugten Ausführungsformen ist das Übergangsgehäuse hingegen nicht mit Einbettungsmasse gefüllt. Hierdurch wird die von Luftblasenbildung ausgehende Gefahr praktisch ganz ausgeschaltet. Bei den offenbarten Ausführungsformen ist das Übergangsgehäuse mit einem Gel gefüllt. Vorteilhaft handelt es sich hierbei um dasjenige Gel, mit welchem auch die Bündelader aufgefüllt ist. Eine derartige Gelfüllung dient einer definierten Lage der eingelegten Fasern sowie der Längswasserdichtigkeit.

Bei der Einbettungsmasse handelt es sich bei den bevorzugten Ausführungsformen um einen Kunststoff, welcher in fließfähigem Zustand in das becherartige Aufteilungselement gegossen wird, die darin befindlichen Teile umschließt und nach dem Aushärten in ihrer Lage fixiert und vor Einwirkungen von außen (mechanische Belastung, Feuchtigkeit etc.) schützt. Bei den bevorzugten Ausführungsformen handelt es sich um einen thermoplastischen Kunststoff, der in durch Erwärmung fließfähigem Zustand eingegossen wird und beim Erkalten aushärtet. Gleichermaßen können auch härtbare Kunstharze oder Kautschuke zur Anwendung kommen.

Zur Trennung des äußeren, mit Einbettungsmasse gefüllten Raumes von dem inneren, vorzugsweise mit Gel gefüllten Raum ist bei den offenbarten Ausführungsbeispielen am Übergangsgehäuse wenigstens eine Dichtung vorgesehen. Unter Dichtung wird hierbei ein Bauteil verstanden, welches bei der Vorkonfektionierung des Lichtwellenleiter-Kabels das Eindringen von Einbettungsmasse in das Übergangsgehäuse im wesentlichen verhindert. Da die verwendete Einbettungsmasse im fließfähigen Zustand eine relativ hohe Viskosität hat, ist für diese Funktion eine Dichtung ausreichend, welche kleinere Öffnungen unabgeschlossen läßt. Eine besonders einfache, bei den Ausführungsbeispielen gezeigte Lösung besteht darin, eine Dichtung vorzusehen, welche mehrere oder alle der mit dem Schlauch überzogenen Fasern gemeinsam umgreift. Soweit hierbei zwickelförmige Öffnungen zwischen den einzelnen Schläuchen und zwischen den Schläuchen und der z.B. ringförmigen Dichtung verbleiben, sind diese so klein, daß die Einbettungsmasse nicht in nennenswerten Umfang in das Innere des Übergangsgehäuses eindringen kann.

Bei den offenbarten Ausführungsformen ist das Übergangsgehäuse mit der Bündeladerhülle verbunden, indem es auf ein über das Mantelende herausstehende Stück der Bündeladerhülle mit den dort herausführenden LWL-Fasern gesteckt ist.

Daneben wurde eine weitere mögliche Ursache für das Auftreten von Mikrobiegungen bei vorkonfektionierten Lichtwellenleiter-Kabeln des Standes der Technik erkannt. Und zwar kann es, solange die Einbettungsmasse noch nicht hart ist, vorkommen, daß Zug auf einen der über die Glasfasern geschobenen Schläuche ausgeübt wird, so daß dieser etwas herausgezogen wird. Wenn dann entsprechend wieder Druck ausgeübt wird, kann es vorkommen, daß sich der Schlauch nicht wieder auf der Faser zurückschiebt, sondern das freigelegte Faser ausgebogen wird. Um diese Gefahr auszuschalten oder wenigstens zu mindern ist das Übergangsgehäuse bei den offenbarten Ausführungsformen mit einer Druck- und Zugentlastung für die Schläuche mit den darin verlaufenden Fasern ausgerüstet. Diese Zug- und Druckentlastung ist bei den offenbarten Ausführungsformen durch ein Bauteil realisiert, welches einen Querdruck auf die Schläuche ausübt. Bei der offenbarten Lösung handelt es sich hierbei um die oben erwähnte Dichtung, welche das Eindringen von Einbettungsmasse in das Übergangsgehäuse verhindert. Dieses Bauteil hat also eine Doppelfunktion als Dichtung und Zug-Druck-Entlastung.

Während also bei den gezeigten Ausführungsformen beide Maßnahmen vereinigt sind, machen andere (nicht gezeigte) Ausführungsformen nur von einem Übergangsgehäuse (ohne Abdichtung und ohne Druck- und Zugentlastung) Gebrauch, und weitere Ausführungsformen nur jeweils von einer der beiden Maßnahmen, also entweder nur einer Dichtung oder einer Zug- und Druckentlastung. Alle diese Ausführungsformen sind vorteilhaft gegenüber den Lösungen des Standes der Technik.

Das Übergangsgehäuse ist bei den offenbarten Ausführungsformen aus Kunststoff gefertigt. Beispielsweise handelt es sich um ein Spritzgießteil. Bei anderen (nicht gezeigten) Ausführungsformen kommt hingegen ein z.B. gedrehtes Metallteil zur Anwendung.

Hinsichtlich des Verfahrens zur Vorkonfektionierung eines Lichtwellenleiter-Kabels sei angemerkt, daß die Reihenfolge eines Teils der Verfahrensschritte frei wählbar ist. Die Aufzählung der in Anspruch 9 angegebenen Schritte gibt nur die bevorzugte Reihenfolge wieder, impliziert aber keine zwingende Schrittreihenfolge, sondern stellt zunächst nur eine Angabe dar, welche Schritte zu dem Verfahren gehören. Bei anderen Ausführungsformen werden beispielsweise zuerst das Aufteilungselement auf dem Kabel angeordnet, und erst anschließend die Fasern freigelegt. Auch kann beispielsweise das Anordnen des Übergangsgehäuses im Aufteilungselement vor dem Freilegen der Fasern erfolgen, etwa indem es zunächst vollständig über eine freigelegte Bündeladerhülle geschoben wird, erst dann die Fasern freigelegt und jeweils mit einem Schlauch überzogen werden, und schließlich das Übergangsgehäuse zurückgeschoben wird, wodurch die Schläuche gemeinsam in dieses eingeführt werden.

Nun zurückkommend auf Figur 1, ist dort im Querschnitt eine Monomodefaser 6 mit Stufenprofil gezeigt. Ein im Querschnitt kreisförmiger Faserkern 21 aus Glas ist von einem im Querschnitt ringförmigen Fasermantel 22, ebenfalls aus Glas, jedoch mit einem kleineren Brechungsindex als demjenigen des Faserkerns 21 umgeben. Dieser ist wiederum von einem Kunststoff-Coating 23 umschlossen, welcher keine optische Funktion, sondern nur eine mechanische Schutzfunktion hat. Der Durchmesser des Faserkerns 21 beträgt z.B. bei einer Faser für 1310 nm 8 bis 10 µm vorzugsweise ungefähr 9 µm, der Außendurchmesser des Fasermantels 22 beträgt 100 bis 150 µm, vorzugsweise 125 µm, und derjenige des Coatings 23 beträgt 200 bis 300 µm, vorzugsweise 250 µm. Bei anderen Ausführungsformen kommen Multimodefasern mit Stufen- oder Gradientenprofil zur Anwendung. Deren Kerndurchmesser liegt beispielsweise im Bereich von 50 µm, bei Mantel- und Coatingdurchmessern ähnlich den genannten Durchmessern der Monomodefaser.

Ein Lichtwellenleiter-Kabel 2 gemäß Figur 2 ist aus einer Bündelader 4 und einem diese umhüllenden Mantel 3 aus Kunststoff aufgebaut. Bei anderen (nicht gezeigten) Ausführungsformen umschließt der Mantel mehrere, z.B. sechs derartige Bündeladern, wobei ggf. ein zentrales Stabilisierungselement beigefügt ist. Die Bündelader 4 ist aus einer im Querschnitt ringförmigen Bündeladerhülle 5 aus Kunststoff und mehreren, darin verlaufenden Glasfasern 6 aufgebaut. Typischerweise handelt es sich um 12 oder 24 Fasern, so daß beispielsweise im letzteren Fall ein Kabel mit sechs Bündeladern insgesamt 144 Fasern aufweist. Die Bündeladerhülle 5 ist als lose Hülle ausgebildet, die Fasern 6 haben also Raum und liegen somit kräftefrei in der Hülle. Querbelastungen können sich dadurch nicht auf die Fasern 6 auswirken. Die Bündeladerhülle 5 ist mit einem Gel 24 aufgefüllt, welches vorteilhaft dazu geeignet ist, eine Längswasserdichtigkeit der Hülle 5 und eine (in gewissen Maßen) definierte Lage der Fasern 6 zu erreichen. Bei dem Gel 24 handelt es sich z.B. um ein sog. Petrocelli-Gel. Der Außendurchmesser der Bündeladerhülle 5 beträgt beispielsweise 2-5 mm, derjenige eines Kabels mit nur einem Aderbündel 5-8 mm.

Figur 3 veranschaulicht eine einzelne Glasfaser 6 mit einem über diese geschobenen Schlauch 11. Bei manchen Ausführungsformen besteht der Schlauch 11 nur aus einem Innenschlauch 25 in Form eines Kunststoffrohrs, welches beispielsweise einen Innendurchmesser von 0,6 mm und einen Außendurchmesser von 0,9 mm hat. Bei der in Figur 3 gezeigten Ausführungsform ist dieser Innenschlauch 25 zusätzlich mit einer Verstärkungseinlage 26a mit vorzugsweise längslaufenden Armierungen, z.B. aus Aramid, und einem äußeren Schutzmantel 26b ausgerüstet. Der Außendurchmesser dieses Schlauchs 11 beträgt z.B. 1,2-2,5 mm. Die Verstärkungseinlage 26a und der Schutzmantel 26b sind fakultativ.

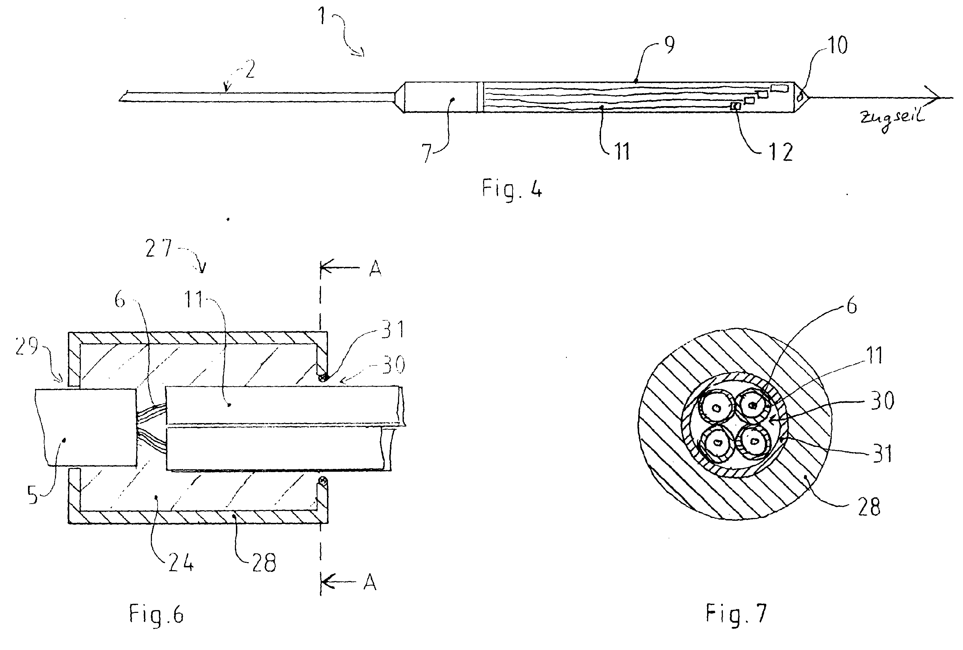

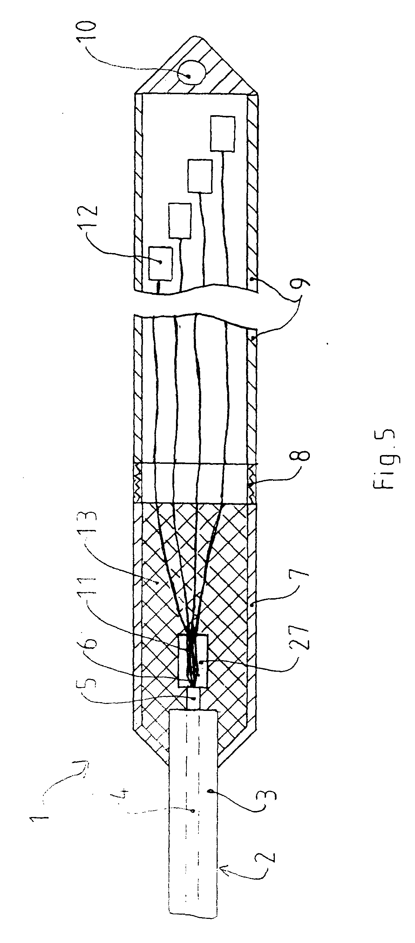

In den Figuren 4 und 5 ist der hier interessierende Endbereich eines vorkonfektionierten Lichtwellenleiter-Kabels 1 dargestellt. Dieses ist in dem nicht-aufgeteilten Kabelabschnitt 2 gemäß Figur 2 aus einem Mantel 3 und einer oder mehreren Bündeladern 4 aufgebaut. Wie bereits erläutert wurde, weist von diesen jede eine Bündeladerhülle 5 auf, in dem mehrere (z.B. 2-144) Glasfasern 6 verlaufen. Auf dem Ende des Kabelabschnitts 2 ist ein becherförmiges Aufteilungselement 7 aufgebracht, welches mit seinem Boden am Mantel 3 zugfest und abdichtend befestigt ist und an seiner oberen Öffnung ein Gewinde 8 aufweist. In dieses Gewinde 8 ist ein Zugschlauch 9 einschraubbar, welcher an seinem anderen Ende eine Kupplung 10, z.B. eine Zugöse aufweist. Der Mantel 3 endet am Boden des Aufteilungselements 7, das Bündeladerhülle 5 erstreckt sich aber noch ein kurzes Stück z.B. zwischen 3 und 15 mm über das Ende des Mantels 3 in Richtung Kabelende. Auf das überstehende Ende der Bündeladerhülle 5 ist ein Übergangsgehäuse 28 aufgesetzt. Die einzelnen Glasfasern 6 führen innerhalb des Übergangsgehäuses 28 aus dem Ende der Bündeladerhülle 5 heraus. Sie sind jeweils einzeln mit einem Schlauch 11 überzogen, welcher vom Inneren des Übergangsgehäuses 28 bis zu einem LWL-Stecker 12 reicht. Da der Außendurchmesser der Schläuche 11 größer ist als derjenige der Glasfasern 6, wird es in der Regel einen kurzen Zwischenabschnitt geben, in dem letztere frei - also ohne Umhüllung durch den Schlauch 11 - liegen. Dieser Zwischenabschnitt liegt vollständig im Inneren des Übergangsgehäuses 28. Die einzelnen Stecker 12 der mehreren Glasfasern 6, bei denen es sich beispielsweise um SC-, ST- oder ESCON-Stecker handelt, sind ganz oder teilweise in Kabellängsrichtung versetzt angeordnet, um in dem freien Innenquerschnitt des Zugschlauchs 9 Platz zu finden. Das Aufteilungselement 7 mit den darin verlaufenden, mit Schläuchen 11 überzogenen Glasfasern 6 und dem darin angeordneten Übergangsgehäuse 28 ist mit einer Einbettungsmasse 13 ausgefüllt, beispielsweise einem thermoplastischen Kunststoff oder einem gehärteten Gießharz. Bei der Installation eines Netzwerkes werden derartig vorkonfektionierte Lichtwellenleiter-Kabel 1 mit ihrer Kupplung 10 an ein Zugseil gekoppelt und hiermit durch Kabelkanäle, Rohre etc. gezogen (Fig. 4). Die Zugkräfte werden dabei vom Zugschlauch 9 über das Aufteilungselement 7 auf den Kabelabschnitt 2 übertragen. Die mit Schläuchen 11 überzogenen Fasern 6 bleiben also zugkraftfrei. Der Zugschlauch 9 schützt ferner die Fasern 6, beispielsweise vor zu großen Biegungen. Wegen seiner Schutzfunktion bleibt er vorteilhaft so lange wie möglich am Kabel, und wird erst durch Drehung im Gewinde 8 abgenommen, wenn z.B. eine Steckdose installiert wird und die Fasern 6 im Steckdosengehäuse aufgenommen werden.

Weitere Einzelheiten des Aufbaus und der Funktion des Übergangsgehäuses 27 gehen aus den Fig. 6 und 7 hervor. Und zwar hat das Übergangsgehäuse 27 einen hohlzylindrischen Gehäusekörper 28 mit einem Durchmesser zwischen 3 und 10 mm, vorzugsweise etwa 5 mm und einer Höhe von 10 bis 30 mm, vorzugsweise etwa 20 mm. Eine Deckfläche des Gehäusekörpers 28 weist eine Öffnung 29 auf, in welche das aus dem Kabelabschnitt 2 herausstehende Endstück der Bündeladerhülle 5 eingeführt werden kann. Die Passung von Öffnung 29 und Bündeladerhülle 5 ist so gewählt, daß eine ausreichende Abdichtung gegenüber hereindrückender fließfähiger Einbettungsmasse 13 gewährleistet ist. In der anderen Deckfläche des Gehäusekörpers 28 befindet sich eine kreisförmige Öffnung 30 für den gemeinsamen Durchtritt sämtlicher, jeweils mit einem Schlauch 11 überzogenen Lichtwellenleiter-Fasern 6. Die Öffnung 30 ist von einer elastischen Ringdichtung 31 umfaßt, die vorzugsweise aus einem Elastomer gefertigt ist. Die Abmessungen der Öffnung 30 und Ringdichtung 31 sowie die Elastizitätseigenschaften der Ringdichtung 31 sind so gewählt, daß einerseits eine gewisse Hemmung gegenüber unbeabsichtigtem Herausziehen und Hineinschieben der Schläuche 11 (Zug- und Druckentlastung) erzielt wird, andererseits ein gemeinsames oder einzelnes Aufschieben der Schläuche 11 auf die Fasern 6 an der Ringdichtung 31 vorbei noch möglich ist. Dabei wird eine so dichte Packung der Schläuche 11 und eine so enge Anlage an die Ringdichtung 31 erzielt, daß die verbleibenden Zwischenräume im Bereich der Öffnung 30 ausreichend klein sind, um ein Eindringen der Einbettungsmasse 13 im fließfähigen Zustand zu verhindern. In Fig. 6 ist auch veranschaulicht, daß in einem kurzen Übergangsbereich im Inneren des Übergangsgehäuses 27 die Fasern 6 frei liegen, da deren Beabstandung in dem mit Schläuchen 11 überzogenen Bereich größer ist als in der Bündeladerhülle 5. Wie oben bereits erwähnt wurde, ist der verbleibende Innenraum des Übergangsgehäuses 27 mit dem Gel 24 ausgefüllt. Das Übergangsgehäuse 27 ist ein aus einem thermoplastischen Kunststoff gefertigtes Spritzgießteil (z.B. aus Polypropylen oder Polystyrol). Bei anderen Ausführungsformen ist es aus Metall gefertigt, z.B. als Drehteil.

Um ein Lichtwellenleiter-Kabel vorzukonfektionieren, werden zunächst an dem betreffenden Ende eine Länge des Mantels 3 und der Bündeladerhülle 5 abgesetzt, die ungefähr der Länge des Zugschlauches 9 entspricht, typischerweise 0,5-1,5m. Dabei läßt man ein kurzes Endstück der Bündeladerhülle 5 aus dem abgesetzten Mantel 3 überstehen. Anschließend wird das Aufteilungselement 7 über die freigelegten Fasern 6 geschoben und an dem Ende des Mantels 3 zugfest und abdichtend befestigt. Dann wird das Übergangsgehäuse 27 über die freigelegten Glasfasern 6 geschoben und mit der Öffnung 29 auf den Stummel der Bündeladerhülle gesetzt. Es wird dann mit dem Gel 24 gefüllt. Anschließend werden die freigelegten Adern 6 jeweils mit einem Schlauch 11 überzogen, und zwar derart, daß vorzugsweise sämtliche Schläuche 11 gemeinsam durch die Öffnung 30 in das Übergangsgehäuse 27 eingeführt werden, und zwar so tief, daß die Fasern 6 nur in einem kurzen, im Inneren des Übergangsgehäuses 27 liegenden Übergangsbereich ohne Umhüllung bleiben. Die gemeinsame Einführung der Schläuche 11 mindert die Gefahr, daß einzelne Glasfasern bei diesem Vorgang ausknicken. Möglich ist aber auch ein einzelnes Überschieben und Einführen der Schläuche 11. Das Aufteilungselement wird schließlich mit der Einbettungsmasse 13 gefüllt, welche dann gehärtet wird (z.B. durch Erwärmung eines warmhärtenden Kunstharzes) oder selbsttätig härtet (z.B. durch Abkühlen eines warm zu vergießenden thermoplastischen Kunststoffs). Hinsichtlich vorteilhafter Weiterbildungen und Ausgestaltungen des Verfahrens wird zur Vermeidung von Wiederholungen auf die obigen Ausführungen zum vorkonfektionierten Lichtwellenleiter-Kabel Bezug genommen.

Bei den dargestellten Ausführungsformen wurde nur der Fall eines Kabels mit nur einer Bündelader 4 näher erläutert. Bei mehreren Bündeladern kann entweder für jede von diesen ein eigenes Übergangsgehäuse im Aufteilungselement vorgesehen werden oder, alternativ, ein speziell ausgebildetes Übergangsgehäuse für die mehreren Bündeladern. Im letzteren Fall hat das Übergangsgehäuse entsprechend mehrere Aderhüllenöffnungen 29. Die mit den Schläuchen überzogenen Fasern können entsprechend durch mehrere Öffnungen 30 oder - alternativ - gemeinsam durch nur eine, entsprechend größere Öffnung 30 herausgeführt sein.

Es hat sich gezeigt, daß mit den offenbarten Ausführungsformen gegenüber dem Stand der Technik signifikante Verbesserungen hinsichtlich der Dämpfung erzielt werden können. Die beschriebene Lösung liefert somit einen Beitrag zur weiteren Verbreitung der Lichtwellenleitertechnologie in der Gebäudeverkabelung.

## Patentansprüche

1. Vorkonfektioniertes Lichtwellenleiter-Kabel mit wenigstens einer Bündelader (4) mit mehreren Lichtwellenleiter-Fasern (6) und einem Aufteilungselement (7) an wenigstens einem Ende des Kabels,
wobei die Fasern (6) auf einer Seite des Aufteilungselements (7) gemeinsam in der Bündelader (4) verlaufen und auf dessen anderer Seite jeweils mit einem Schlauch (11) überzogen sind, und
wobei das Aufteilungselement (7) wenigstens teilweise mit einer Einbettungsmasse (13) gefüllt ist,
**dadurch gekennzeichnet, daß**
im Aufteilungselement (7) wenigstens ein Übergangsgehäuse (27) angeordnet ist, welches die Fasern (6) im Übergangsbereich vom gemeinsamen Verlauf in der Bündelader (4) zu dem mit Schläuchen (11) überzogenen Verlauf umschließt.

2. Vorkonfektioniertes Lichtwellenleiter-Kabel gemäß Anspruch 1, **dadurch gekennzeichnet, daß** das Übergangsgehäuse (27) nicht mit Einbettungsmasse (13) gefüllt ist.

3. Vorkonfektioniertes Lichtwellenleiter-Kabel nach Anspruch 2, **dadurch gekennzeichnet, daß** das Übergangsgehäuse (27) mit einem Gel (24) gefüllt ist.

4. Vorkonfektioniertes Lichtwellenleiter-Kabel nach Anspruch 2 oder 3, **dadurch gekennzeichnet, daß** am Übergangsgehäuse (27) wenigstens eine Dichtung (31) vorgesehen ist, welche bei der Vorkonfektionierung des Lichtwellenleiter-Kabels das Eindringen von Einbettungsmasse (13) in das Übergangsgehäuse (27) verhindert.

5. Vorkonfektioniertes Lichtwellenleiter-Kabel nach Anspruch 4, **dadurch gekennzeichnet, daß** die Dichtung (31) mehrere oder alle der mit einem Schlauch (11) überzogenen Fasern (6) umgreift.

6. Vorkonfektioniertes Lichtwellenleiter-Kabel nach einem der Ansprüche 1 bis 5, **dadurch gekennzeichnet, daß** das Übergangsgehäuse (27) mit einer Hülle (5) der Bündelader (4) verbunden ist.

7. Vorkonfektioniertes Lichtwellenleiter-Kabel nach einem der Ansprüche 1 bis 6, **dadurch gekennzeichnet, daß** das Übergangsgehäuse (27) mit wenigstens einer Druck- und Zugentlastung für die Schläuche (11) mit den darin verlaufenden Fasern (6) ausgerüstet ist.

8. Vorkonfektioniertes Lichtwellenleiter-Kabel nach einem der Ansprüche 4 bis 6 und Anspruch 7, **dadurch gekennzeichnet, daß** die Dichtung (31) auch für die Zug- und Druckentlastung der Schläuche (11) mit den darin verlaufenden Fasern (6) sorgt.

9. Verfahren zur Vorkonfektionierung eines Lichtwellenleiter-Kabels mit wenigstens einer Bündelader (4) mit mehreren Lichtwellenleiter-Fasern (6), welches folgende Schritte umfaßt:
- an wenigstens einem Ende des Kabels werden die Fasern (6) freigelegt;
- ein Aufteilungselement (7) wird am Übergang von nicht-freigelegten zu freigelegten Fasern (6) auf dem Kabel angeordnet;
- ein Übergangsgehäuse (27) wird im Aufteilungselement (7) angeordnet;
- die freigelegten Fasern (6) werden jeweils mit einem Schlauch (11) überzogen;
- die Schläuche (11) werden einzeln oder gemeinsam in das Übergangsgehäuse (27) eingeführt;
- das Aufteilungselement (7) wird zumindest teilweise mit Einbettungsmasse (13) gefüllt, wonach die Einbettungsmasse (13) gehärtet wird oder selbsttätig härtet.

10. Verfahren nach Anspruch 9, mit den Merkmalen eines der Ansprüche 2 bis 8.
